# EUROPEAN PATENT SPECIFICATION

(11) **EP 3 838 453 B1**
(45) Date of publication and mention of the grant of the patent: **23.08.2023**
(21) Application number: 20215724.4
(22) Date of filing: 18.12.2020
(51) Int. Cl.: B22F 10/28, B29C 64/214, B29C 64/393, B29C 64/194, B33Y 30/00, B05C 11/04, B22F 12/67, B22F 10/37, B22F 12/90

(54) **VARIABLE HEIGHT RECOATER BLADE**
HÖHENVERSTELLBARE NACHBESCHICHTERKLINGE
LAME DE DISPOSITIF D'ENROBAGE À HAUTEUR VARIABLE

(30) Priority: 20.12.2019 US 201916723281
(43) Date of publication of application: 23.06.2021
(73) Proprietor: Hamilton Sundstrand Corporation, Charlotte, NC 28217-4578 (US)
(72) Inventor: COLSON, Paul M., Westfield, MA Massachusetts 01085 (US)
(74) Representative: Dehns

(56) References cited:
- WO-A1-2017/143145
- US-A1- 2018 369 855
- US-A1- 2019 134 746

## Description

### BACKGROUND

The present disclosure relates to additive manufacturing. More particularly, the present disclosure relates to methods and systems for monitoring an additive manufacturing build process.

Powder bed fusion additive manufacturing processes offer a technique capable of manufacturing a myriad of aerospace components and assemblies. Additive manufacturing processes operate application of multiple successive broad powder layers and then subsequent fusion of specific areas of powder to form a three dimensional workpiece. With additive powder bed fusion processes, certain build parameters and geometries can cause resulting thicknesses of solidified material to be greater than corresponding thicknesses of next powder layers, thus making contact with and potentially damaging a recoater blade as a new layer of powder is applied. This can cause interruptions in the build process as the recoater blade is repaired or replaced, often necessitating that the partially-built workpiece be scrapped. US 2019/0134746 A1 discloses a recoater with pull-off elements for adjusting the powder bed topography.

### SUMMARY

A method of controlling powder in an additive manufacturing process is provided as defined by claim 1.

An additive manufacturing system is provided as defined by claim 8.

The present summary is provided only by way of example, and not limitation. Other aspects of the present disclosure will be appreciated in view of the entirety of the present disclosure, including the entire text, claims, and accompanying figures.

### BRIEF DESCRIPTION OF THE DRAWINGS

FIG. 1 is a side view of a powder bed additive manufacturing system.
FIG. 2 is a perspective view of a backside of the recoater blade and shows a pin array.
FIG. 3A is a perspective view of a pin and a first leading edge element.
FIG. 3B is a perspective view of the pin array and a second leading edge element.
FIG. 4 is a flowchart of a method of using the recoater to adjust a thickness of a powder layer.

While the above-identified figures set forth one or more embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which fall within the scope of the invention as defined by the claims. The figures may not be drawn to scale, and applications and embodiments of the present invention may include features and components not specifically shown in the drawings.

### DETAILED DESCRIPTION

The proposed system utilizes a recoater blade including an array of tightly spaced individually height adjustable square pins. The heights of these pins can be adjusted based upon measurements of variations in layer thickness from a height measurement and visual identification system. As layers of the solid workpiece are built up, the pins are controlled to be adjusted (each with an individual actuator) up or down based on the data from the measurement system so as to avoid areas of the formed workpiece with elevated solids coming into contact with the adjustable pins.

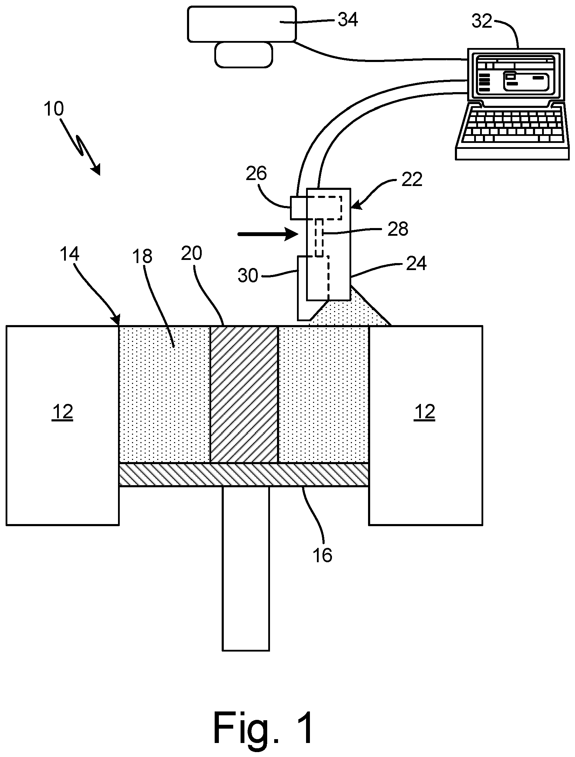

FIG. 1 is a side cross-section view of additive manufacturing system 10 and shows container walls 12, powder bed 14, build plate 16, powdered material 18, workpiece 20, recoater 22 (with shield 24, actuator 26, driving arm 28, and pin array 30), controller 32, and sensor 34.

Additive manufacturing system 10 is a machine configured to produce objects with layer-by-layer additive manufacturing. In some non-limiting embodiments, additive manufacturing system 10 can be configured for laser additive manufacturing, laser powder bed fusion, electron beam powder bed fusion, and/or selective laser sintering to create a three-dimensional object out of powdered material 18. Container walls 12 are containment walls that help to contain the four sides of powder bed 14. Powder bed 14 includes build plate 16, powdered material 18, and workpiece 20. Build plate 16 is a platform that is configured to move in a vertical direction (up and down as shown in FIG. 1.). Powdered material 18 is feedstock material in powdered form. In some non-limiting embodiments, powdered material 18 can be or include titanium alloys, nickel alloys, aluminum alloys, steel alloys, cobalt-chrome alloys, copper alloys, or other types of powdered metal alloys. In some embodiments, powdered material can include polymer powder. Workpiece 20 is an article being constructed by the layer-by-layer additive manufacturing process of additive manufacturing system 10.

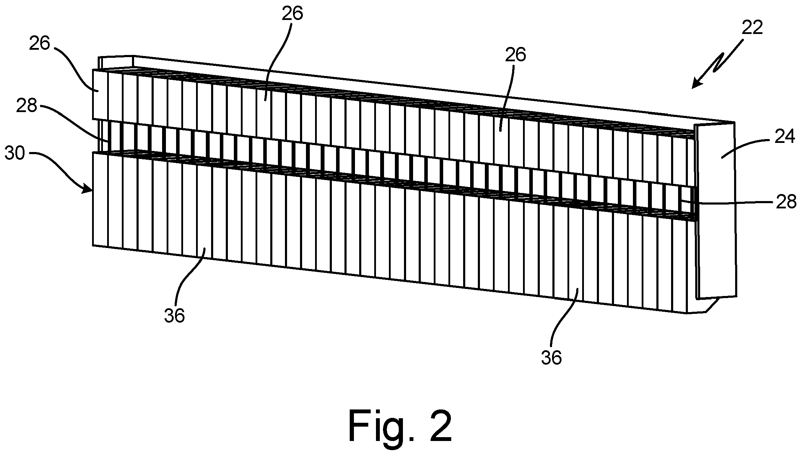

Recoater 22 is a powder wiping device. Shield 24 is a panel or wall. Actuator 26 is a device for causing movement. In this example, actuator 26 includes a plurality of individual actuators 26 (see e.g., FIG. 2). Also in this example, actuator 26 can include a circular or linear actuator. A type of actuator 26 can include an electric, hydraulic, or pneumatic actuator. Driving arm 28 is an elongate piece of solid material such as a rod or shaft. Pin array 30 is a plurality of individual pins (see e.g., FIG. 2). In this example, a shape of each pin of pin array 30 is polyhedral and generally in the shape of a rectangular box. Controller 32 is an electronic control device. In this non-limiting embodiment, controller 32 is a computer. Sensor 34 is an instrument for sensing a surface profile or topography. As referred to hereinafter sensor 34 can be a structured light or a laser scanner, but a person skilled in the art will recognize that other forms of topographic sensors can alternatively be used.

Container walls 12 are disposed on the sides of and are in contact with powdered material 18 of powder bed 14. Powder bed 14 is positioned below sensor 34. Build plate 16 is positioned between container walls 12 and is in contact with the bottom sides of powdered material 18 and workpiece 20. Powdered material 18 is disposed on build plate 16 and between container walls 12. Workpiece 20 is disposed in and surrounded by a portion of powdered material 18 and sits upon build plate 16. Recoater 22 is positioned above build plate 16 and is configured to move relative to powdered material 18. In this example, recoater 22 is electrically connected to controller 32 via wires.

Shield 24 is mounted to a front of recoater 22 (with the front of recoater 22 being on the right side of recoater 22 as shown in FIG. 1). Actuator 26 is attached and mounted to a backside of shield 24. Driving arm 28 extends between and is connected to actuator 26 and to pin array 30. Pin array 30 is mounted on and slideably engaged with shield 24. Controller 32 is positioned away from powder bed 14 and is in data communication with recoater 22 and sensor 34. In this example, sensor 34 is mounted above powder bed 14. In this example, sensor 34 is electrically connected to controller 32 via wires.

Container walls 12 contain powdered material 18 within powder bed 14. Powder bed 14 is used to form workpiece 20 from powdered material 18 by way of selectively solidifying portions of powdered material 18. Build plate 16 functions as a base upon which powdered material 18 is placed and that supports workpiece 20. As workpiece 20 is formed, build plate 16 lowers after each layer of workpiece 20 is iteratively formed. Powdered material 18 serves as feedstock or raw material from which workpiece 20 is solidified and formed. After a layer powder spreading step, recoater 22 is drawn across a top surface of powder bed 14 to wipe or scrape a portion of powdered material 18 from powder bed 14. In this example, recoater 22 moves from left to right (as shown in FIG. 1).

During use of recoater 22, shield 24 acts as a support to which actuator 26 and pin array 30 are mounted. As recoater 22 is drawn across powder bed 14, shield 24 pulls actuator 26, driving arm 28, and pin array 30 across powder bed 14. Actuator 26 drives up and down motion of driving arm 28. As driving arm 28 is driven up and down by actuator 26, driving arm 28 pushes pin array 30 up and down relative to shield 34. Pin array 30 moves up and down relative to shield 24 as recoater 22 is drawn across powder bed 14.

Controller 32 controls and receives communications from the various components of additive manufacturing system 10. In this example, controller 32 also stores a machine learning algorithm that is used, in conjunction with the data from sensor 34, to actively monitor the additive manufacturing build-process layer by layer. The machine learning algorithm is configured to continually monitor the topographical data from sensor 34 and adjust the heights of each pin of pin array 30 based on height measurements powdered material 18 and workpiece 20. In this example, sensor 34 emits a signal that is reflected off of powdered material 18 and workpiece 20. The reflected beam is then captured by a detector on sensor 34. Based on an angle and time of return of the beam and a location on sensor 34, sensor software can determine how far the surface of powder bed 14 is away from sensor 34. In this way, sensor 34 can capture a three-dimensional map (e.g., topographical profile) of various surface heights of powder bed 14 after a layer of workpiece 20 has been incrementally solidified and/or as powder bed 14 is recoated with powder.

Additive manufacturing system 10 utilizes sensor 34 to scan powder bed 14 as powder bed 14 is being formed by the additive manufacturing layer powder spreading process. Sensor 34 allows for capture of a topography of the surface of powder bed 14. For example, sensor 34 captures an image of powder bed 14 after solidification of a layer of powdered material 18 is complete. After sensor 34 captures a topological profile of powder bed 14, controller 32 measures deviations from a nominal model and determines relative height data. The height data is then used to monitor and adjust positions of each pin in pin array 30 based on the topology of powder bed 14. As layers of powdered material 18 and workpiece 20 are built up, the pins of pin array 30 are controlled to move up or down to avoid areas of powder bed 14 with elevated solids (e.g., portions of workpiece 20) in response to the topographical data of powder bed 14.

FIG. 2 is a perspective view of a backside of recoater 22 and shows shield 24, actuators 26, driving arms 28, and pin array 30 with pins 36. Here, recoater 22 is shown as including pin array 30 with a plurality of pins 36. In alternative embodiments, pin array 30 can include more or fewer pins 36 than shown in FIG. 2. In this example, there are approximately eight pins 36 per inch. In other words, a width of each of pins 36 can be approximately 0.125 inches (3.175 mm). Each of pins 36 is individually replaceable as wear occurs. Each of pins 36 is connected to and slideably engaged with both shield 24 and with an adjacent pin 36.

In order to prevent powder flow between adjacent pins, recoater 22 can include one or more of the following features (alone or in combination). In one non-limiting embodiment, individual pins 36 can be ship-lapped to each other. In another non-limiting embodiment, a seal element can be provided between each of pins 36. Additionally, interfaces between each individual pins 36 can be angled. Recoater 22 can also include one or more of the following features (alone or in combination) to limit or prevent non-linear motion of pins 36 relative to shield 24. For example, pins 36 can interface with grooved bearing surfaces in shield 24 to limit forward and backward and/or side-to-side motion. In another example, pins 36 can include tracks (e.g., tongue and groove) to limit forward and backward and/or side-to-side motion. In yet another example, additive manufacturing system 10 can contain a sealing gas pressurizing pin (e.g., a retention connection) above the build chamber to limit contamination of powdered material 18. These and other features can be incorporated to maintain long wear life, minimize required maintenance, and to limit contamination of the manufacturing process.

A vertical position of each individual pin 36 is provided by recoater 22. For example, each individual actuator 26 drives an individual driving arm 28 which drives the vertical motion of an individual pin 36. In this way, pin array 30 with pins 36 enables a resolution across pin array 30 of powder bed topology as pin array 30 is drawn across powder bed 14. For example, the vertical heights of pins 36 can be adjusted so as to create a contour with varying valleys and apexes to control a height (e.g., topology) of powdered material 18 as recoater 22 is drawn across powder bed 14. The desired resolution of the powder bed topology can be based on one or more of the following factors: powder material, length and width of powder bed 14, powder size distribution, component surface finish of workpiece 20, and build rate.

The adjustability of pins 36 of pin array 30 allows recoater 22 to avoid areas of powder bed 14 with elevated solids (e.g., elevated portions of workpiece 20) that could otherwise damage recoater 22.

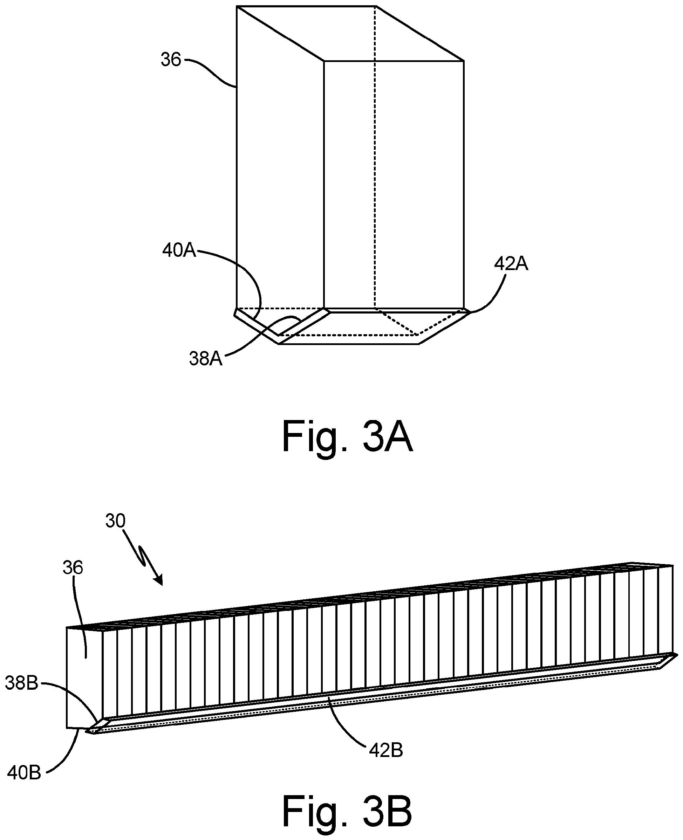

FIG. 3A is a perspective view of an individual pin 36 of pin array 30 (not according to the invention) and shows leading edge 38A, bottom face 40A, and covering 42A. Leading edge 38A is a face of pin 36 that faces towards shield 24 (see e.g., FIGS. 1-2). Bottom face 40A is a face of pin 36 that is located on an end of pin 36. Covering 42A is a piece of solid material. In this example, a material of covering 42A can be elastomer or metal. Leading edge 38A is positioned so as to be on a leading edge of pin 36 as recoater 22 is drawn across powder bed 14. Bottom face 40A is disposed on a bottom end of pin 36 (with top-bottom orientation shown as up-down in FIG. 3A).

In this example, covering 42A is attached to and extends across both of leading edge 38A and bottom face 40A of pin 36. In other non-limiting embodiments, covering 42A can be attached to and extend across just one of either leading edge 38A or bottom face 40A of pin 36. As shown in FIG. 3A, covering 42A extends a width of pin 36. In such an example, each of pins 36 of pin array 30 can include their own respective, discrete covering 42A mounted to each pin 36 (different from a continuous covering as shown in FIG. 3B).

In one example, covering 42A acts as a squeegee (or squilgee) to wipe powdered material 18. Covering 42A also provides a protective barrier between pin 36 and powdered material 18 and workpiece 20. Covering 42A prevents the wearing down of pin 36 throughout the lifecycle of recoater 22. For example, covering 42A can provide a material hardness that is different from that of the material of pin 36 and such that the hardness of covering 42A improves the durability of recoater 22 as pins 36 are drawn across powdered material 18. Covering 42A also provides a coefficient of friction that is different from that of a material of pin 36 and such that the coefficient of friction of covering 42A improves the behavior (e.g., flowability) of powdered material 18 as pins 36 are drawn across powdered material 18 by recoater 22. In another example, covering 42A can be detachable so as to allow for replacement of covering 42A as covering 42A wears or becomes damaged.

FIG. 3B is a perspective view of pin array 30 (according to the invention) and shows pins 36, leading edges 38B, bottom faces 40B, and covering 42B. In contrast to covering 42A shown in FIG. 3A, covering 42B in FIG. 3B is shown as extending across the entire expanse (or width) of pin array 30. Covering 42B is connected and mounted to each individual pin 36 of pin array 30. In this example, covering 42B can be attached to each of pins 36 at a single point of each pin 36 such that a minor rotation of a localized portion of covering 42B is permitted with respect to each pin 36. This minor rotation of covering 42B enables covering 42B to bend and flex in response to the position adjustments of pins 36. The minor localized rotations of covering 42B also enable covering 42B to occupy a continuous curved shape along the width of pin array 30. This flexibility of covering 42B provides improved resolution and smoother topology of powder bed 14 thereby allowing for improved quality (e.g., surface finish, dimensional accuracy, etc.) of workpiece 20.

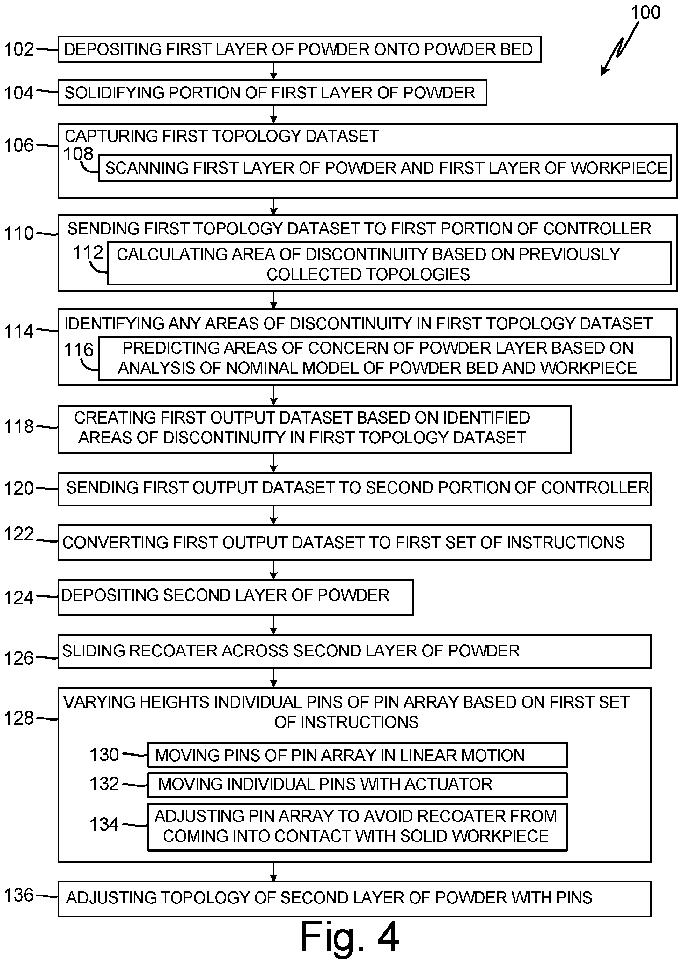

FIG. 4 is a flowchart of method 100 of controlling a height of deposited powder in an additive manufacturing process. Method 100 includes steps 102 through 136.

Step 102 includes depositing a first layer of powder onto powder bed 14 of additive manufacturing system 10. Step 104 includes solidifying a portion of the first layer of powdered material 18 to form a first layer of workpiece 20. Step 106 includes capturing a first topology dataset of the first layer of powdered material 18 and the first layer of workpiece 20. Step 106 also includes step 108 of scanning the first layer of powdered material 18 and the first layer of workpiece 20 with sensor 34 (e.g., a structured light or a laser scanner). Step 110 includes sending the first topology dataset to a first portion of controller 32. Step 110 also include step 112 of calculating an area of discontinuity based on previously collected topologies of solidified layers of powdered material 18 and solidified layers of workpiece 20.

Step 114 includes identifying any areas of discontinuity in the first topology dataset. Step 114 also includes step 116 of predicting areas of concern of the layers of powdered material 18 based on an analysis of a nominal model of powder bed 14 and workpiece 20. Step 118 includes creating a first output dataset based on the identified areas of discontinuity in the first topology dataset. Step 120 includes sending the first output dataset to a second portion of controller 32. Step 122 includes converting the first output dataset to a first set of instructions for recoater 22 of the additive manufacturing system. Step 124 includes depositing a second layer of powdered material 18 on top of the first layer of workpiece 20 and on top of the first layer of powdered material 18. Step 126 includes sliding recoater 22 across the second layer of powdered material 18.

Step 128 includes varying heights of individual pins of the pin array based on the first set of instructions from controller 32 as recoater 22 is slid across the second layer of powdered material 18. Step 128 also includes steps 130, 132, and 134. Step 130 includes moving one of pins 36 of pin array 30 in a linear motion relative to shield 24 and relative to other pins 36 of pin array 36. Step 132 includes moving individual pins 36 with actuator 26. Step 134 includes adjusting pin array 30 to avoid recoater 22 from coming into contact with an elevated solid region of the first layer of workpiece 20. Step 136 includes adjusting a topology of the second layer of powdered material 18 with pins 36 of pin array 30 as recoater 22 is slid across the second layer of powdered material 18. In another example, during solidification, the parameters related to melting can be adjusted based on the varying thickness of the deposited powdered material 18.

Method 100 allows pin array 30 to avoid coming into contact with higher than usual solidified portions of workpiece 20 so as to prevent damage to recoater 22. In addition to avoiding higher than usual solid portions of powdered material 18, method 100 can be used to vary the thickness of powdered material 18 across build plate 16 allowing multiple layer thicknesses in varying areas of the build to create specific surface finishes, material properties, or increase build speed in areas of reduced concern.

### Discussion of Possible Embodiments

A method of controlling powder in an additive manufacturing process includes solidifying a portion of a first layer of powder to form a first layer of a workpiece. A first topology indicative of the first layer of powder and the first layer of the workpiece is captured. The recoater is moved across the second layer of powder. Heights of portions of the recoater are varied while moving the recoater, based on the first topology captured, to avoid contact of the recoater with solidified portions of the first layer that could stress the portions of the recoater if the heights of the portions were not varied.

The first topology can be sent to a first portion of a controller after the first topology is captured; and/or a first output dataset can be sent to a second portion of the controller after the first output dataset is created.

A topology of the second layer of powder can be adjusted with the pins of the pin array as the recoater is moved across the second layer of powder.

The recoater comprises:
a front shield; an array of pins that can be slideably mounted to the front shield; and an actuator that can be mounted to the front shield and operably connected to the array of pins; and a covering attached to a bottom face or to a leading edge of the array of pins and extending across an entire expanse of the array of pins.

Individual pins can be moved with the actuator.

An area of discontinuity can be calculated based on previously collected topologies of solidified layers of powder and/or solidified layers of the workpiece.

Areas of concern of the powder layer can be predicted based on an analysis of a nominal model of the powder bed and the workpiece.

The first layer of powder and/or the first layer of the workpiece can be scanned with a structured light or a laser scanner.

The recoater can be adjusted to avoid the recoater from coming into contact with an elevated solid region of the first layer of the workpiece.

An additive manufacturing system includes a powder bed with a build plate, a recoater, an array of pins supported by the recoater, and a sensor. The recoater positioned above the powder bed and disposed to wipe across a top of the powder bed. Each pin of the array is configured to be individually moved relative to the recoater while the recoater is being wiped across the top of the powder bed. The sensor is configured to capture a topology of the powder bed for use in moving the plurality of pins relative to the recoater. The recoater also comprises a covering attached to a bottom face or to a leading edge of the array of pins and extending across an entire expanse of the array of pins.

The recoater can comprise: a shield that can be disposed to move relative to the powder bed; an actuator that can be mounted to the shield; wherein each pin of the pin array can be connected to the actuator by a driving arm, wherein each pin of the pin array can be slideably engaged with the shield; and/or a controller can be electrically connected to the sensor and/or to the actuator, wherein the controller can be configured to send and/or receive electrical signals to and/or from the sensor and the actuator.

The controller can control actuation of each pin of the pin array via corresponding driving arm based on the captured topology of the powder bed.

The driving arm can comprise a plurality of driving arms extending between the actuator and the pins of the pin array, wherein one of the driving arms of the plurality of driving arms can be connected to the actuator and to one of the pins, wherein the actuator can be disposed to drive motion of the driving arms.

Each pin of the pin array can be slideably engaged with an adjacent pin of the pin array.

A method of controlling a height of deposited powder (not as such falling under the scope of the independent claims) includes depositing a first layer of powder onto a powder bed. A portion of the first layer of powder is solidified to form a first layer of a workpiece. A first topology dataset is captured. Any areas of discontinuity are identified. A first output dataset based is created on the identified areas of discontinuity. The first output dataset is converted to a first set of instructions for a recoater of the additive manufacturing system. A second layer of powder is deposited on the first layer of the workpiece and on top of the first layer of powder. The recoater is slid across the second layer of powder. The heights of individual pins of the pin array are varied based on the first set of instructions from the controller as the recoater is slid across the second layer of powder.

The method of the preceding paragraph can optionally include, additionally and/or alternatively, any one or more of the following steps, features, configurations and/or additional components.

The first topology dataset can be sent to a first portion of a controller after the first topology dataset is captured; and/or the the first output dataset can be sent to a second portion of the controller after the first output dataset is created.

An area of discontinuity can be calculated based on previously collected topologies of solidified layers of powder and solidified layers of the workpiece; and/or areas of concern of the powder layer can be predicted based on an analysis of a nominal model of the powder bed and the workpiece.

The pin array can be adjusted to avoid the recoater from coming into contact with an elevated solid region of the first layer of the workpiece.

While the invention has been described with reference to an exemplary embodiment(s), it will be understood by those skilled in the art that various changes may be made without departing from the scope of the invention as defined by the claims. In addition, many modifications may be made to adapt a particular situation or material to the teachings of the invention without departing from the scope of the claims. Therefore, it is intended that the invention not be limited to the particular embodiment(s) disclosed, but that the invention will include all embodiments falling within the scope of the appended claims.

## Claims

1. A method of controlling powder in an additive manufacturing process, the method comprising:
solidifying a portion of a first layer of powder to form a first layer of a workpiece (20);
capturing a first topology indicative of the first layer of powder and the first layer of the workpiece;
moving a recoater (22) across the second layer of powder; wherein the recoater comprises:
a front shield (24);
an array (30) of pins (36) slideably mounted to the front shield;
an actuator (26) mounted to the front shield and operably connected to the array of pins; and
a covering (42B) attached to a bottom face or to a leading edge of the array of pins and extending across an entire expanse of the array of pins; the method further comprising:
varying heights of portions of the recoater while moving the recoater, based on the first topology captured, to avoid contact of the recoater with solidified portions of the first layer that could stress the portions of the recoater if the heights of the portions were not varied.

2. The method of claim 1, further comprising:
sending the first topology to a first portion of a controller (32) after the first topology is captured; and
sending a first output dataset to a second portion of the controller after the first output dataset is created.

3. The method of claim 1 or 2, wherein varying heights of portions of the recoater adjusts a topology of the second layer of powder with the pins of the pin array as the recoater is moved across the second layer of powder.

4. The method of any preceding claim, further comprising:
moving a pin of the array of pins in a linear motion relative to the front shield and relative to the other pins of the array of pins.

5. The method of any preceding claim, wherein varying heights of portions of the recoater comprises moving individual pins with the actuator.

6. The method of any preceding claim, further comprising calculating an area of discontinuity based on previously collected topologies of solidified layers of powder and solidified layers of the workpiece, and optionally further comprising predicting areas of concern of the powder layer based on an analysis of a nominal model of the powder bed and the workpiece.

7. The method of any preceding claim, wherein capturing the first topology of the first layer of powder and the first layer of the workpiece further comprises scanning the first layer of powder and the first layer of the workpiece with a structured light or a laser scanner.

8. An additive manufacturing system comprising:
a powder bed (14) with a build plate (16);
a recoater (22) positioned above the powder bed and disposed to wipe across a top of the powder bed; wherein the recoater comprises:
an array (30) of pins supported by the recoater, each pin (36) of the array configured to be individually moved relative to the recoater while the recoater is being wiped across the top of the powder bed; the system further comprising:
a sensor (34) configured to capture a topology of the powder bed for use in moving the plurality of pins relative to the recoater; **characterised in that** the recoater comprises:
a covering (42B) attached to a bottom face or to a leading edge of the array of pins and extending across an entire expanse of the array of pins.

9. The additive manufacturing system of claim 8, further comprising:
wherein the recoater comprises:
a shield (24) disposed to move relative to the powder bed;
an actuator (26) mounted to the shield; and
wherein each pin of the pin array is connected to the actuator by a driving arm (28), wherein each pin of the pin array is slideably engaged with the shield; and
a controller (32) electrically connected to the sensor and the actuator, wherein the controller is configured to send and receive electrical signals to and from the sensor and the actuator.

10. The additive manufacturing system of claim 9, wherein the controller controls actuation of each pin of the pin array via corresponding driving arm based on the captured topology of the powder bed.

11. The additive manufacturing system of claim 9 or 10, wherein the driving arm (28) comprises a plurality of driving arms extending between the actuator and the pins of the pin array, wherein one of the driving arms of the plurality of driving arms is connected to the actuator and to one of the pins, wherein the actuator is disposed to drive motion of the driving arms.

12. The additive manufacturing system of any of claims 8 to 11, wherein each pin of the pin array is slideably engaged with an adjacent pin of the pin array.

## Patentansprüche

1. Verfahren zur Pulversteuerung in einem additiven Fertigungsprozess, wobei das Verfahren umfasst:
Verfestigen eines Teils einer ersten Pulverschicht zum Bilden einer ersten Schicht eines Werkstücks (20);
Erfassen einer ersten Topologie, die die erste Pulverschicht und die erste Schicht des Werkstücks angibt;
Bewegen eines Wiederbeschichters (22) über die zweite Pulverschicht; wobei der Wiederbeschichter umfasst:
ein Frontschild (24);
eine Anordnung (30) von Stiften (36), die verschiebbar an dem Frontschild montiert sind;
ein Stellglied (26), das an dem Frontschild montiert und wirksam mit der Anordnung von Stiften verbunden ist; und
eine Abdeckung (42B), die an einer Unterseite oder an einer Vorderkante der Anordnung von Stiften befestigt ist und sich über die gesamte Weite der Anordnung von Stiften erstreckt;
wobei das Verfahren ferner Folgendes umfasst:
Variieren von Höhen von Teilen des Wiederbeschichters beim Bewegen des Wiederbeschichters basierend auf der ersten erfassten Topologie, um Kontakt des Wiederbeschichters mit verfestigten Teilen der ersten Schicht zu vermeiden, die die Teile des Wiederbeschichters belasten könnten, wenn die Höhen der Teile nicht variiert würden.

2. Verfahren nach Anspruch 1, das ferner Folgendes umfasst:
Senden der ersten Topologie an einen ersten Teil einer Steuerung (32), nachdem die erste Topologie erfasst wurde; und
Senden eines ersten Ausgabedatensatzes an einen zweiten Teil der Steuerung, nachdem der erste Ausgabedatensatz erstellt wurde.

3. Verfahren nach Anspruch 1 oder 2, wobei Variieren von Höhen von Teilen des Wiederbeschichters eine Topologie der zweiten Pulverschicht mit den Stiften der Anordnung von Stiften anpasst, während der Wiederbeschichter über die zweite Pulverschicht bewegt wird.

4. Verfahren nach einem der vorstehenden Ansprüche, das ferner Folgendes umfasst:
Bewegen eines Stifts der Anordnung von Stiften in einer linearen Bewegung relativ zu dem Frontschild und relativ zu den anderen Stiften der Anordnung von Stiften.

5. Verfahren nach einem der vorstehenden Ansprüche, wobei Variieren von Höhen von Teilen des Wiederbeschichters Bewegen einzelner Stifte mit dem Stellglied umfasst.

6. Verfahren nach einem der vorhergehenden Ansprüche, ferner umfassend Berechnen eines Diskontinuitätsbereichs basierend auf zuvor erfasster Topologien von verfestigten Pulverschichten und verfestigten Schichten des Werkstücks und optional ferner umfassend Vorhersagen von Problembereichen der Pulverschicht basierend auf einer Analyse eines Nennmodells des Pulverbetts und des Werkstücks.

7. Verfahren nach einem der vorhergehenden Ansprüche, wobei das Erfassen der ersten Topologie der ersten Pulverschicht und der ersten Schicht des Werkstücks ferner Scannen der ersten Pulverschicht und der ersten Schicht des Werkstücks mit einem Streifenlicht- oder einem Laserscanner umfasst.

8. Additives Fertigungssystem, umfassend:
ein Pulverbett (14) mit einer Bauplattform (16);
einen Wiederbeschichter (22), der über dem Pulverbett positioniert und derart angeordnet ist, dass er über die Oberseite des Pulverbetts streicht; wobei der Wiederbeschichter umfasst:
eine Anordnung (30) von Stiften, die von dem Wiederbeschichter getragen werden, wobei jeder Stift (36) der Anordnung dazu konfiguriert ist, einzeln relativ zu dem Wiederbeschichter bewegt zu werden, während der Wiederbeschichter über die Oberseite des Pulverbetts gestrichen wird; wobei das System ferner Folgendes umfasst:
einen Sensor (34), der dazu konfiguriert ist, eine Topologie des Pulverbetts zur Verwendung bei dem Bewegen der Vielzahl von Stiften relativ zu dem Wiederbeschichter zu erfassen; **dadurch gekennzeichnet, dass** der Wiederbeschichter umfasst:
eine Abdeckung (42B), die an einer Unterseite oder an einer Vorderkante der Anordnung von Stiften befestigt ist und sich über die gesamte Weite der Anordnung von Stiften erstreckt.

9. Additives Fertigungssystem nach Anspruch 8, ferner umfassend:
wobei der Wiederbeschichter Folgendes umfasst:
ein Schild (24), der zum Bewegen relativ zu dem Pulverbett angeordnet ist;
ein Stellglied (26), das an dem Schild montiert ist; und
wobei jeder Stift der Anordnung von Stiften durch einen Antriebsarm (28) mit dem Stellglied verbunden ist, wobei jeder Stift der Anordnung von Stiften verschiebbar mit dem Schild in Eingriff steht; und
eine Steuerung (32), die elektrisch mit dem Sensor und dem Stellglied verbunden ist, wobei die Steuerung dazu konfiguriert ist, elektrische Signale an den Sensor und das Stellglied zu senden und von diesen zu empfangen.

10. Additives Fertigungssystem nach Anspruch 9, wobei die Steuerung die Betätigung jedes Stifts der Anordnung von Stiften über den entsprechenden Antriebsarm basierend auf der erfassten Topologie des Pulverbetts steuert.

11. Additives Fertigungssystem nach Anspruch 9 oder 10, wobei der Antriebsarm (28) eine Vielzahl von Antriebsarmen umfasst, die sich zwischen dem Stellglied und den Stiften der Anordnung von Stiften erstrecken, wobei einer der Antriebsarme der Vielzahl von Antriebsarme mit dem Stellglied und mit einem der Stifte verbunden ist, wobei das Stellglied zum Antreiben der Bewegung der Antriebsarme angeordnet ist.

12. Additives Fertigungssystem nach einem der Ansprüche 8 bis 11, wobei jeder Stift der Anordnung von Stiften verschiebbar mit einem benachbarten Stift der Anordnung von Stiften in Eingriff steht.

## Revendications

1. Procédé de contrôle de poudre dans un procédé de fabrication additive, le procédé comprenant :
la solidification d'une partie d'une première couche de poudre pour former une première couche d'une pièce (20) ;
la capture d'une première topologie indicative de la première couche de poudre et de la première couche de la pièce ;
le déplacement d'un dispositif d'enrobage (22) sur la seconde couche de poudre ; dans lequel le dispositif d'enrobage comprend :
un écran avant (24) ;
un réseau (30) de broches (36) montées de manière coulissante sur l'écran avant ;
un actionneur (26) monté sur l'écran avant et connecté de manière fonctionnelle au réseau de broches ; et
un revêtement (42B) fixé à une face inférieure ou à un bord avant du réseau de broches et s'étendant sur toute une étendue du réseau de broches ; le procédé comprenant en outre :
la variation des hauteurs des parties du dispositif d'enrobage tout en déplaçant le dispositif d'enrobage, sur la base de la première topologie capturée, pour éviter le contact du dispositif d'enrobage avec des parties solidifiées de la première couche qui pourraient déformer les parties du dispositif d'enrobage si les hauteurs des portions ne variaient pas.

2. Procédé selon la revendication 1, comprenant en outre :
l'envoi d'une première topologie à une première partie d'un contrôleur (32) après que la première topologie a été capturée ; et
l'envoi d'un premier ensemble de données de sortie à une seconde partie du contrôleur après la création du premier ensemble de données de sortie.

3. Procédé selon la revendication 1 ou 2, dans lequel des hauteurs variables de parties du dispositif d'enrobage ajustent une topologie de la seconde couche de poudre avec les broches du réseau de broches lorsque le dispositif de recouvrement est déplacé à travers la seconde couche de poudre.

4. Procédé selon une quelconque revendication précédente, comprenant en outre :
le déplacement d'une broche du réseau de broches dans un mouvement linéaire par rapport à l'écran avant et par rapport aux autres broches du réseau de broches.

5. Procédé selon une quelconque revendication précédente, dans lequel la variation des hauteurs de parties du dispositif d'enrobage comprend le déplacement de broches individuelles avec l'actionneur.

6. Procédé selon une quelconque revendication précédente, comprenant en outre le calcul d'une zone de discontinuité sur la base de topologies précédemment collectées de couches solidifiées de poudre et de couches solidifiées de la pièce, et éventuellement comprenant en outre la prédiction de zones préoccupantes de la couche de poudre sur la base d'une analyse d'un modèle nominal du lit de poudre et de la pièce.

7. Procédé selon une quelconque revendication précédente, dans lequel la capture de la première topologie de la première couche de poudre et de la première couche de la pièce comprend en outre le balayage de la première couche de poudre et de la première couche de la pièce avec une lumière structurée ou un scanner laser.

8. Ensemble de fabrication additive comprenant :
un lit de poudre (14) avec une plaque de fabrication (16) ;
un dispositif d'enrobage (22) positionné au-dessus du lit de poudre et disposé pour essuyer une partie supérieure du lit de poudre ; dans lequel le dispositif d'enrobage comprend :
un réseau (30) de broches supportées par le dispositif d'enrobage, chaque broche (36) du réseau étant configurée pour être déplacée individuellement par rapport au dispositif d'enrobage pendant que le dispositif d'enrobage est essuyé sur le dessus du lit de poudre ; le système comprenant en outre :
un capteur (34) configuré pour capturer une topologie du lit de poudre à utiliser pour déplacer la pluralité de broches par rapport au dispositif d'enrobage ; **caractérisé en ce que** la coucheuse comprend :
un revêtement (42B) fixé à une face inférieure ou à un bord avant du réseau de broches et s'étendant sur toute une étendue du réseau de broches.

9. Système de fabrication additive selon la revendication 8, comprenant en outre :
dans lequel le procédé comprend :
un écran (24) disposé pour se déplacer par rapport au lit de poudre ;
un actionneur (26) monté sur l'écran ; et
dans lequel chaque broche du réseau de broches est connectée à l'actionneur par un bras d'entraînement (28), dans lequel chaque broche du réseau de broches est engagée de manière coulissante avec l'écran ; et
un contrôleur (32) connecté électriquement au capteur et à l'actionneur, dans lequel le contrôleur est configuré pour envoyer et recevoir des signaux électriques vers et depuis le capteur et l'actionneur.

10. Système de fabrication additive selon la revendication 9, dans lequel le contrôleur commande l'actionnement de chaque broche du réseau de broches via un bras d'entraînement correspondant sur la base de la topologie capturée du lit de poudre.

11. Système de fabrication additive selon la revendication 9 ou 10, dans lequel le bras d'entraînement (28) comprend une pluralité de bras d'entraînement s'étendant entre l'actionneur et les broches du réseau de broches, dans lequel l'un des bras d'entraînement de la pluralité de bras d'entraînement est relié à l'actionneur et à l'une des broches, l'actionneur étant disposé pour entraîner le mouvement des bras d'entraînement.

12. Système de fabrication additive selon l'une quelconque des revendications 8 à 11, dans lequel chaque broche du réseau de broches est engagée de manière coulissante avec une broche adjacente du réseau de broches.
